# EUROPEAN PATENT SPECIFICATION

(11) **EP 1 573 844 B1**
(45) Date of publication and mention of the grant of the patent: **09.12.2009**
(21) Application number: 03749367.3
(22) Date of filing: 03.09.2003
(51) Int. Cl.: H01M 8/04

(54) **LIQUID COOLED FUEL CELL STACK**
FLÜSSIGKEITSGEKÜHLTE BRENNSTOFFZELLENSTAPEL
ASSEMBLAGE DE PILES A COMBUSTIBLE A REFROIDISSEMENT LIQUIDE

(30) Priority: 14.11.2002 US 294074
(43) Date of publication of application: 14.09.2005
(73) Proprietor: 3M Innovative Properties Company, St. Paul MN 55133-3427 (US)
(72) Inventor: HERDTLE, Thomas, Saint Paul, MN 55133-3427 (US); MORTAZAVI, Hamid, R., Saint Paul, MN 55133-3427 (US); STEINBACH, Andrew, J., Saint Paul, MN 55133-3427 (US); DEBE, Mark, K., Saint Paul, MN 55133-3427 (US); SCHLEIF, Larry, A., Saint Paul, MN 55133-3427 (US)
(74) Representative: Vossius & Partner
(86) International application number: PCT/US2003/027560
(87) International publication number: WO 2004/045013

(56) References cited:
- EP-A- 0 981 175
- WO-A-99/57781
- US-A- 4 574 112
- US-A- 4 873 155
- PATENT ABSTRACTS OF JAPAN vol. 007, no. 200 (E-196), 3 September 1983 (1983-09-03) & JP 58 097272 A (HITACHI SEISAKUSHO KK), 9 June 1983 (1983-06-09)
- PATENT ABSTRACTS OF JAPAN vol. 1998, no. 13, 30 November 1998 (1998-11-30) & JP 10 223238 A (MITSUBISHI ELECTRIC CORP), 21 August 1998 (1998-08-21)

## Description

This invention was made with Government support under Cooperative Agreement DE-FC02-99EE50582 awarded by DOE. The Government has certain rights in this invention.

### Field of the Invention

This invention relates to a liquid cooled fuel cell stack which provides for both cooling and uniform temperature management throughout the stack.

### Summary of the Invention

Briefly, the present invention provides a liquid cooled fuel cell stack comprising: fuel cell modules comprising one or more membrane electrode assemblies (MEA's); cooling plates comprising cooling channels; a manifold box communicating with each cooling channel inlet; and a diffuser within the manifold box having a plurality of diffuser outlets distributed evenly with respect to the cooling channel inlets. Typically a two-chamber manifold box is used, to allow counter-flow of coolant in opposite directions in cooling channels on opposite sides of the stack. Typically the stack is insulated around its exterior.

US4574112 discloses a two-manifold liquid cooled fuel all stack to allow counter-flow of coolant in opposite directions at each of the cooling plates. The temperature gradient between each adjacent counter-flow channel portion varies across the plate and is therefore not uniform.

What has not been described in the art, and is provided by the present invention, is an apparatus for both cooling and maintaining substantially uniform temperature throughout a fuel cell stack by providing uniform coolant flow, coolant counter-flow, and external insulation.

It is an advantage of the present invention to provide cooling for a fuel cell stack while maintaining substantially uniform temperature throughout the stack.

### Brief Description of the Drawing

Fig. 1 is an isometric drawing representing an orthogonal projection of a fuel cell stack useful in the practice of the present invention.
Fig. 2 is an exploded view of a manifold box and diffuser useful in the practice of the present invention.
Fig. 3 is an exploded view of a manifold box and diffuser useful in the practice of the present invention.
Fig. 4 is a graph representing stack temperature variation as a function of heat generation for a fuel cell stack according to the present invention (trace A) and a comparative fuel cell stack (trace B).

### Detailed Description of Preferred Embodiments

Operation of a fuel cell stack presents the problem of cooling a piece of power-generating equipment which takes the form of a large block, extended in three dimensions, and which generates substantial heat throughout, while maintaining uniform temperature throughout the block.

The present invention provides a liquid cooled fuel cell stack comprising: fuel cell modules comprising one or more membrane electrode assemblies (MEA's); cooling plates comprising cooling channels; a manifold box communicating with each cooling channel inlet; and a diffuser within the manifold box, typically having a plurality of diffuser outlets distributed evenly with respect to the cooling channel inlets. Typically a two-chamber manifold box is used, to allow counter-flow of coolant in opposite directions in cooling channels on opposite sides of the stack. Typically the stack is insulated around its exterior.

Fuel cells utilize a fuel such as hydrogen and an oxidizing agent such as oxygen to produce an electrical current. The two chemical reactants, i.e., the fuel and the oxidizing agent, separately react at two isolated electrodes containing catalyst. An ion exchange element is located between the electrodes to prevent direct chemical reaction of the two reactants and to conduct ions. In the case of a typical hydrogen fuel cell, the ion exchange element is an ion conducting membrane (ICM). The ICM conducts protons (H⁺) from the hydrogen electrode to the oxygen electrode. Electrons follow a separate external electrical path, thereby generating an electric current. The combination of an ICM and electrodes is commonly referred to as a "membrane electrode assembly," or MEA. The catalyst electrode material may be coated directly on the ICM to form a catalyst-coated membrane (CCM). Typically a fluid transport layer is applied to each side of the ICM, which may be called a gas diffusion layer (GDL), a diffuser/current collector (DCC) or a fluid transport layer (FTL). The GDL is a layer of porous material which is electrically conductive yet which allows the passage of reactant and product fluids. Typical gas diffusion layers comprise carbon fibers, often in the form of a paper or a cloth. The term MEA describes a CCM with or without GDL's attached. The term 5-layer MEA specifically describes a CCM with GDL's attached. The catalyst electrode layers may be applied to the ICM or to the GDL during manufacture, so long as they are disposed between ICM and GDL in the completed MEA so that the resulting 5-layer MEA comprises, in order: GDL, catalyst, ICM, catalyst, GDL. In the practice of the present invention, any suitable MEA's may be used.

The MEA is typically sandwiched between two rigid plates, known as distribution plates, also known as bipolar plates (BPP's) or monopolar plates. Like the GDL, the distribution plate must be electrically conductive. The distribution plate is typically made of a carbon composite, metal, or plated metal material. The distribution plate distributes reactant or product fluids to and from the MEA electrode surfaces, typically through one or more fluid-conducting channels engraved, milled, molded or stamped in the surface(s) facing the MEA(s). These channels are sometimes designated a flow field. The distribution plate may distribute fluids to and from two consecutive MEA's in a stack, with one face directing fuel to the anode of the first MEA while the other face directs oxidant to the cathode of the next MEA (and removes product water), hence the term "bipolar plate." Alternately, the distribution plate may have channels on one side only, to distribute fluids to or from an MEA on only that side, which may be termed a "monopolar plate." The term bipolar plate, as used in the art, typically encompasses monopolar plates as well. A typical fuel cell stack comprises a number of MEA's stacked alternately with bipolar plates.

The MEA is maintained under compression during use. The degree of compression is selected with reference to a given MEA so as to avoid over-compression or under-compression. Under-compression may result in poor electrical contact between the various layers and poor sealing at the gaskets. Over-compression may result in damage to the MEA and occlusion of gas pathways, by closing pores in the GDL or by "tenting" of the GDL into the flow field channels of the distribution plates. The MEA's may be compressed by a mechanism that collectively compresses all of the MEA's in the stack to a common pressure, e.g., by use of tie-rods, long bolts, or clamping devices located on the perimeter of the stack or running through the middle of the stack. Alternately, the MEA's may be compressed by use of a mechanism such as is described in co-pending patent application number 10/294,224 filed on even date herewith. In that system, compression plates alternate with fuel cell modules and each fuel cell module is compressed individually by the action of mechanical linkages joining pairs of compression plates. The compression plates described therein may double as cooling plates, as described below.

The MEA generates significant heat during use, and therefore requires some mechanism for removal of heat. Uniformity of temperature throughout the stack is important to avoid deleterious effects of hotter or cooler spots, including reduced performance and damage to the MEA. The present invention contemplates a liquid cooled fuel cell stack.

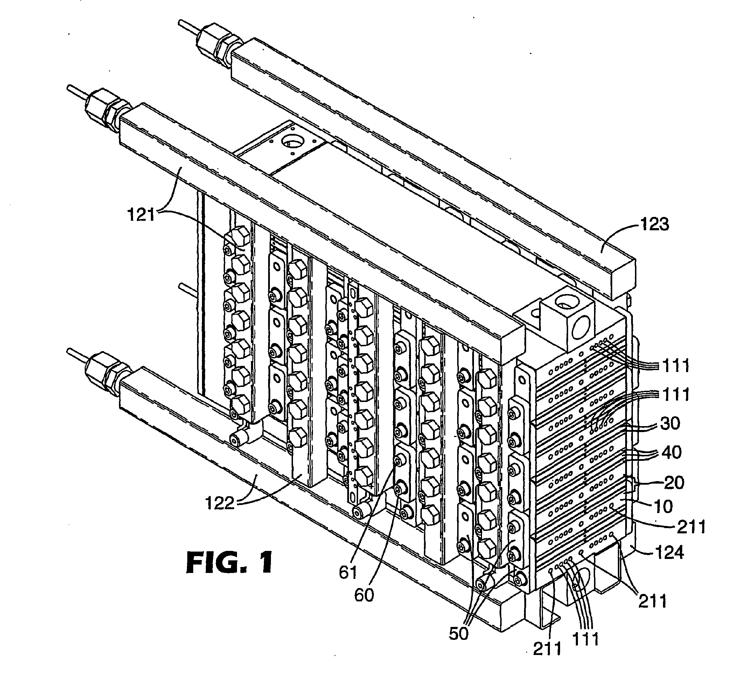

With reference to Fig. 1, a fuel cell stack useful in the practice of the present invention comprises cooling plates (10) stacked alternately with fuel cell modules (20). Fuel cell modules (20) comprise at least one membrane electrode assembly (MEA) (30), and may contain two or more MEA's (30). MEA's (30) are interleaved with distribution plates (40) to form fuel cell modules (20). Cooling plates (10) may be made of any suitable material. Cooling plates (10) are typically made of a thermally conductive material such as a metal, or plated metal material. Typically the cooling plates are made of an electrically conductive material. Additional considerations include weight, cost, and manufacturability. Typically, the cooling plates are aluminum. Cooling plates (10) comprise liquid cooling channels (111) having an inlet and an outlet, typically on opposite sides of the plate. Cooling channels may have any suitable cross-sectional shape, such as circular, rectangular, ellipsoidal, and the like. Typically a fuel cell module (20) will comprise one or two MEA's (30) so that each MEA (30) is adjacent to at least one cooling plate (10).

Cooling plates (10) may comprise inlet and outlet ports adapted to interact with external manifolds (121, 122, 123, 124) in order to deliver reactant or product fluids to and from distribution plates (40), which in turn deliver reactant or product fluids to and from MEA's (30). Thus the inlet and outlet ports comprise reactant/product pathways for transport of fluids to and/or from said distribution plates. The inlet and outlet ports of the cooling plates (10) may interact with ports in the distribution plates (40) via O-ring seals. Since inlet and outlet ports carry fluids which may be corrosive to the material of the cooling plates (10), inlet and outlet ports may have a corrosion resistant coating on their internal surfaces or may be fitted with insert pieces comprising a material other than the material of the cooling plates, typically a material inert to the reactants or products transported therein, which may include a polyetheretherketone (PEEK) polymer. Alternately, reactant/product manifolds may be internal to the fuel cell stack. In the case of internal manifolding, each manifold comprises a series of coinciding openings passing through successive fuel cell modules (20) and cooling plates (10), typically in a direction orthogonal to the plane of each plate or module. Typically, o-rings or other seals are located between fuel cell modules (20) and cooling plates (10) to form a sealed manifold pathway. The reactant and product manifolds communicate with pathways in each fuel cell module (20) that open into the appropriate channels of the distribution plates (40).

Fig. 1 depicts a system wherein cooling plates double as compression plates, as is described in co-pending patent application number 10/295,518 filed on even date herewith. Pairs of compression plates (10) are joined by mechanical linkages comprising latches (50) held in place by bolts (60, 61). Latches (50) must be electrically non-conductive, so as to avoid short circuiting the fuel cell module (20), and typically comprise a strong polymeric non-conductor such as polyetheretherketone (PEEK).

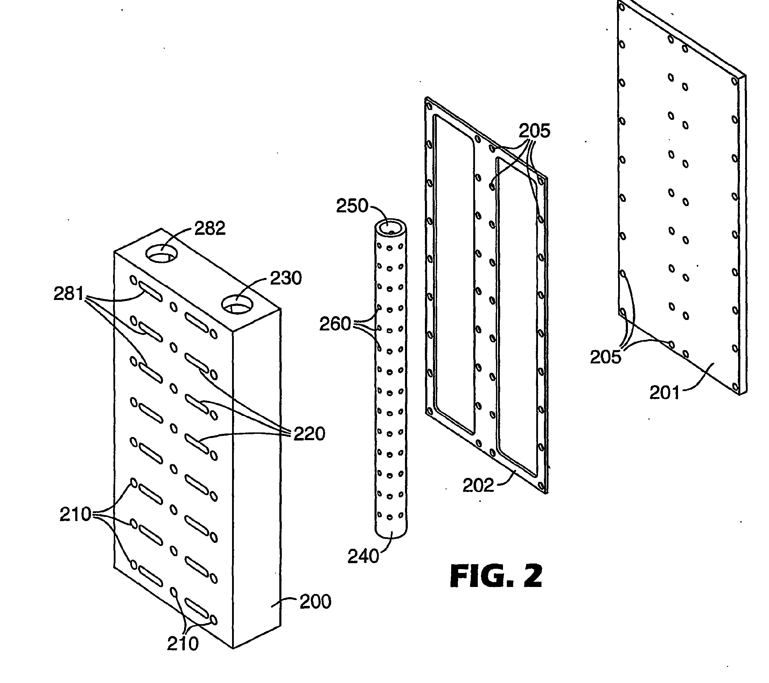

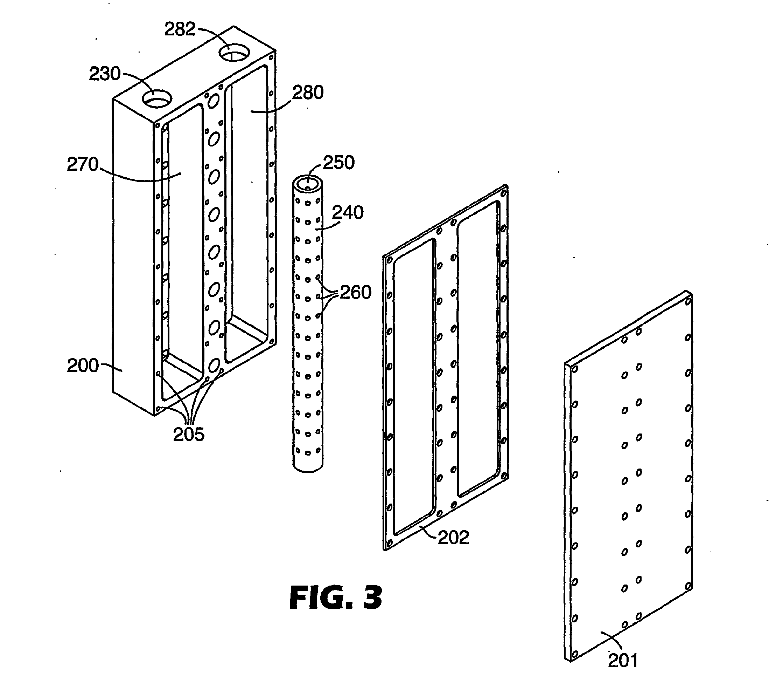

With reference to Figs. 2 and 3, a fluid delivery mechanism useful in the practice of the present invention comprises a manifold box (200, 201, 202). The depicted manifold box includes a body (200) and a cover (201) joined to the body with a gasket (202) by screws through screw holes (205). The manifold box may be joined to the stack by screws through screw holes (210, 211) in the manifold box and in the cooling plates (see Fig. 1). Manifold box body (200) must be made of an electrically non-conductive material or must be electrically isolated from the stack, or else it will create a short circuit of the fuel cell modules. Manifold box outlets (220) communicate with inlets of the cooling channels (111) of the cooling plates (see Fig. 1). An external source of cooling fluid, such as a hose or pipe connecting to a cooling fluid pump, connects to manifold box inlet (230). Diffuser (240) is positioned within the manifold box. Diffuser (240) has a diffuser inlet (250) communicating with the manifold box inlet (230) so as to receive all flow of the liquid coolant into the manifold box inlet (230). Diffuser (240) has a plurality of diffuser outlets (260) distributed along its length. Any suitable distribution of diffuser outlets (260) may be used, such that a substantially uniform coolant fluid pressure is maintained in the manifold box outside the diffuser. Typically, diffuser outlets (260) are distributed evenly with respect to the position of the manifold box outlets (220) and therefore with respect to the position of the cooling channels (111) of the cooling plates (see Fig. 1). Typically, diffuser outlets (260) are cut perpendicular to the flow direction into the diffuser (240). Diffuser (240) is closed at its far end. Alternately, diffuser may comprise a mesh, cloth, or other permeable structure capable of maintaining a substantially uniform coolant fluid pressure in the manifold box outside the diffuser.

In one embodiment of the present invention, depicted in Figs. 2 and 3, the manifold box (200, 201, 202) is divided into two chambers, an inlet chamber (270) and an outlet chamber (280). The inlet chamber (270) functions as described above. The outlet chamber (280) communicates with outlets of the cooling channels (111) of the cooling plates (see Fig. 1) via manifold box collecting ports (281) and allows cooling fluid to leave through manifold box exit (282), typically via a hose or pipe to an external reservoir of cooling fluid or a cooling fluid pump. No diffuser is necessary in the outlet chamber (280). Employing a two chamber manifold box on each side of the stack creates a counter-flow of coolant traveling in opposite directions through channels on opposite sides of the stack, since a first plurality of cooling channels has cooling channel inlets on a first face of the cooling plate and cooling channel outlets on a second face of the cooling plate, and a second plurality of cooling channels has inlets on the second face and outlets on the first face. In effect, four manifolds are provided, to supply each of: the cooling channel inlets of the first plurality of cooling channels; the cooling channel outlets of the first plurality of cooling channels; the cooling channel inlets of the second plurality of cooling channels; and the cooling channel outlets of the second plurality of cooling channels. The resulting counter-flow may be used to improve uniformity of temperature throughout the stack.

In the practice of the present invention, the stack is typically wrapped in heat insulating material so that outer and inner portions of the stack are maintained at similar temperatures. Any suitable heat insulating material may be used, such as fiberglass insulation or the like. The heat insulating material typically has an R-value of at least 3, more typically at least 5, and more typically at least 8. The stack is typically insulated on substantially all of at least two sides and more typically insulated on substantially all of four sides.

This invention is useful in the design, manufacture and operation of fuel cell stacks and systems.

Objects and advantages of this invention are further illustrated by the following examples, but the particular materials and amounts thereof recited in these examples, as well as other conditions and details, should not be construed to unduly limit this invention.

### Example

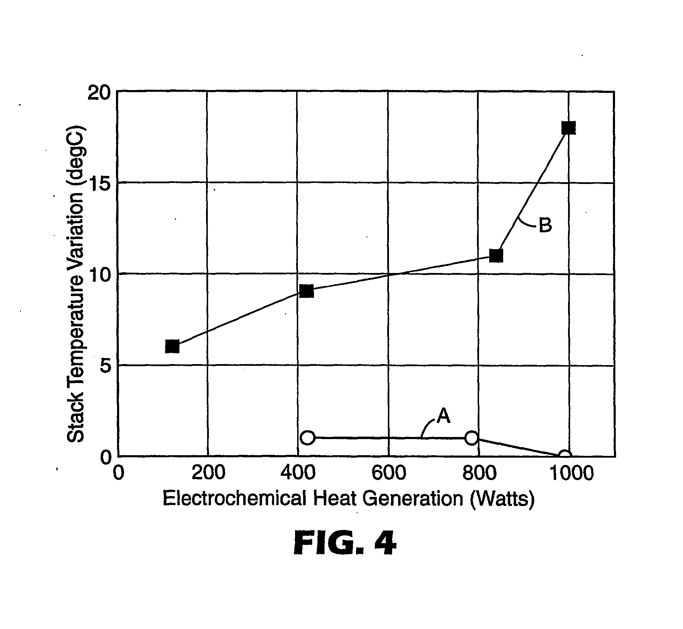

A fuel cell stack substantially according to Fig. 1 was fitted with a manifold box substantially according to Figs. 2 and 3, with and without the use of diffuser (240). In both cases, the stack was wrapped with fiberglass insulating material. Fig. 4 reports the difference in measured temperature between the top-most and bottom-most cooling plates measured at a variety of power levels in the diffuser (trace A) and no diffuser (comparative trace B) cases. All variables were identical in each run, except that coolant flow rate was 4.5L/min when the diffuser was used and 3.1L/min when the diffuser was not used.

## Claims

1. A liquid cooled fuel cell stack comprising one or more cooling plates, each cooling plate comprising a first plurality of cooling channels each having a cooling channel inlet and a cooling channel outlet and a second plurality of cooling channels each having a cooling channel inlet and a cooling channel outlet, wherein cooling channel inlets of said first plurality of cooling channels and cooling channel outlets of said second plurality of cooling channels are on a first face of said cooling plate wherein cooling channel outlets of said first plurality of cooling channels and cooling channel inlets of said second plurality of cooling channels are on a second face of said cooling plate, and
additionally comprising a first manifold communicating with said cooling channel inlets of said first plurality of cooling channels; a second manifold communicating with said cooling channel outlets of said first plurality of cooling channels; a third manifold communicating with said cooling channel inlets of said second plurality of cooling channels; and a fourth manifold communicating with said cooling channel outlets of said second plurality of cooling channels.

2. The liquid cooled fuel cell stack according to claim 1 wherein said cooling plates are compression plates.

## Patentansprüche

1. Flüssigkeitsgekühlter Brennstoffzellenstapel, umfassend eine oder mehrere Kühlplatten, wobei jede Kühlplatte mehrere erste Kühlkanäle, die jeweils einen Kühlkanaleinlass und einen Kühlkanalauslass aufweisen, und mehrere zweite Kühlkanäle umfasst, die jeweils einen Kühlkanaleinlass und einen Kühlkanalauslass aufweisen, wobei Kühlkanaleinlässe der mehreren ersten Kühlkanäle und Kühlkanalauslässe der mehreren zweiten Kühlkanäle auf einer ersten Seite der Kühlplatte liegen, wobei Kühlkanalauslässe der mehreren ersten Kühlkanäle und Kühlkanaleinlässe der mehreren zweiten Kühlkanäle auf einer zweiten Seite der Kühlplatte liegen, und zusätzlich umfassend eine erste Sammelleitung, die mit den Kühlkanaleinlässen der mehreren ersten Kühlkanäle kommuniziert; eine zweite Sammelleitung, die mit den Kühlkanalauslässen der mehreren ersten Kühlkanäle kommuniziert; eine dritte Sammelleitung, die mit den Kühlkanaleinlässen der mehreren zweiten Kühlkanäle kommuniziert; und eine vierte Sammelleitung, die mit den Kühlkanalauslässen der mehreren zweiten Kühlkanäle kommuniziert.

2. Flüssigkeitsgekühlter Brennstoffzellenstapel nach Anspruch 1, wobei die Kühlplatten Kompressionsplatten sind.

## Revendications

1. Assemblage de piles à combustible à refroidissement liquide, comprenant une ou plusieurs plaques de refroidissement, chaque plaque de refroidissement comprenant une première pluralité de canaux de refroidissement ayant chacun une entrée de canal de refroidissement et une sortie de canal de refroidissement et une deuxième pluralité de canaux de refroidissement ayant chacun une entrée de canal de refroidissement et une sortie de canal de refroidissement, des entrées de canal de refroidissement de ladite première pluralité de canaux de refroidissement et des sorties de canal de refroidissement de ladite deuxième pluralité de canaux de refroidissement étant sur une première face de ladite plaque de refroidissement, des sorties de canal de refroidissement de ladite première pluralité de canaux de refroidissement et des entrées de canal de refroidissement de ladite deuxième pluralité de canaux de refroidissement étant sur une deuxième face de ladite plaque de refroidissement, et comprenant en outre un premier collecteur communiquant avec lesdites entrées de canal de refroidissement de ladite première pluralité de canaux de refroidissement ; un deuxième collecteur communiquant avec lesdites sorties de canal de refroidissement de ladite première pluralité de canaux de refroidissement ; un troisième collecteur communiquant avec lesdites entrées de canal de refroidissement de ladite deuxième pluralité de canaux de refroidissement ; et un quatrième collecteur communiquant avec lesdites sorties de canal de refroidissement de ladite deuxième pluralité de canaux de refroidissement.

2. Assemblage de piles à combustible à refroidissement liquide selon la revendication 1, dans lequel lesdites plaques de refroidissement sont des plaques de compression.
